# EUROPÄISCHE PATENTSCHRIFT

(11) **EP 3 570 499 B1**
(45) Veröffentlichungstag und Bekanntmachung des Hinweises auf die Patenterteilung: **07.04.2021**
(21) Anmeldenummer: 18172386.7
(22) Anmeldetag: 15.05.2018
(51) Int. Cl.: H04L 12/40, G05B 19/042, H04L 29/08

(54) **VERFAHREN ZUR FUNKTIONAL SICHEREN VERBINDUNGSIDENTIFIZIERUNG**
METHOD FOR FUNCTIONALLY SECURE CONNECTION IDENTIFICATION
PROCÉDÉ D'IDENTIFICATION DE CONNEXION FONCTIONNELLEMENT SÛRE

(43) Veröffentlichungstag der Anmeldung: 20.11.2019
(73) Patentinhaber: Siemens Aktiengesellschaft, 80333 München (DE)
(72) Erfinder: Barthel, Herbert, 91074 Herzogenaurach (DE); Hubert, Johannes, 90559 Burgthann (DE); Meyer, Thomas Markus, 90475 Nürnberg (DE); Taschke, Ulrich, 90766 Fürth (DE); Walter, Maximilian, 90408 Nürnberg (DE)

(56) Entgegenhaltungen:
- EP-A1- 1 596 262
- WO-A1-2013/147734
- "OPC unified architecture - Part 3: Address Space Model", IEC 62541-3:2015, IEC, 3, RUE DE VAREMBÉ, PO BOX 131, CH-1211 GENEVA 20, SWITZERLAND, 25. März 2015 (2015-03-25), Seiten 1-258, XP082002744, [gefunden am 2015-03-25]

## Beschreibung

Die Erfindung betrifft ein Verfahren zur funktional sicheren Verbindungsidentifizierung bei einem Datenaustausch zwischen zwei Kommunikationsteilnehmern in einem Kommunikationssystem, wobei ein erster Kommunikationsteilnehmer als ein Daten-Anbieter mit einer ersten Adresskennung und ein zweiter Kommunikationsteilnehmer als Daten-Anfrager mit einer zweiten Adresskennung arbeitet.

Eine funktional sichere Kommunikation und Verbindungsidentifizierung wird beispielsweise mittels PROFIsafe realisiert.

Die Systembeschreibung "PROFIsafe Systembeschreibung, Technologie und Anwendung", Version November 2010, Bestell-Nr,. 4.3.4.1, Herausgeber PROFIBUS Nutzerorganisation e.V. (PNO) beschreibt die Realisierung einer sicherheitsgerichteten Kommunikation und insbesondere einer sicheren Verbindungsidentifizierung bei PROFIBUS und PROFINET Protokollen.

Auch das Handbuch "SIMATIC, Industrie Software S7 F/FH Systems - Projektieren und Programmieren", Ausgabe 05/2009, A5E00048979-06 beschreibt eine sicherheitsgerichtete Kommunikation, insbesondere bei SIMATIC Steuerungen.

All den genannten und aufgezeigten bekannten Verfahren zur sicherheitsgerichteten Kommunikation, insbesondere in der Automatisierungstechnik, ist gemeinsam, dass die Adressbeziehung, umfassend Ziel- und Quelladresse, beispielsweise von PROFIBUS oder PROFINET Teilnehmern, fest projektiert ist.

Als Beispiel sei das Sicherheitsprotokoll PROFIsafe genannt. Bei PROFIsafe wird ein 32 Bit Codename, welcher einer Adressbeziehung entspricht, zur eindeutigen Verbindungsidentifizierung genutzt.

Bei der funktional sicheren Kommunikation beispielsweise bei PROFIsafe muss garantiert werden, dass eine Restfehlerrate pro Zeiteinheit hinreichend klein ist. Betrachtet werden Verletzungen der Datenintegrität (Datenintegrität wird durch eine Signatur - z.B. CRC - überpüft), einer Authentizität (Authentizität wird durch einen Vergleich mit einer Quell- und Zieladresse oder mit einem Codenamen überprüft) und einer Timelines (Timelines bedeutet: Telegrammdaten dürfen nur verwendet werden, wenn sie in der richtigen Reihenfolge und rechtzeitig empfangen werden).

Insbesondere bei einer Kommunikation in neueren Industrieanlagen soll es möglich werden, dass Kommunikationsbeziehungen häufig und schnell wechseln können, d.h. ein Kommunikationsteilnehmer benötigt zu einem Zeitpunkt Informationen von einem bestimmten anderen Kommunikationsteilnehmer und zu einem anderen Zeitpunkt wiederum von einem anderen Kommunikationsteilnehmer. Beispiele hierzu sind rekonfigurierbare modulare Maschinen, fahrerlose Transportsysteme (AGV's), Werkzeugwechsler, Spannrahmen, Krankatzen usw..

Nach dem aufgezeigten Stand der Technik muss zwischen allen potentiellen Kommunikationspartnern jeweils eine funktionale sichere Kommunikationsverbindung fest programmiert und projektiert werden. Bei n-Teilnehmern sind dies bis zu n • (n - 1) Verbindungen, von denen zu einem Zeitpunkt jeweils nur ein sehr geringer Teil gleichzeitig aktiv ist. Für jede dieser Verbindungen muss aber ein eindeutiger Authentizitäts-Code (AA-Code bei Profisafe: Codename) vergeben werden, der dazu dient, Adressierungsfehler (d.h. Zustellung eines Kommunikationstelegramms an einen falschen Empfänger) sicher zu erkennen.

Es ist Aufgabe der vorliegenden Erfindung das bisher genutzte funktional sichere Kommunikationsverfahren bzw. die funktional sichere Verbindungsidentifizierung dahingehend zu vereinfachen, dass in den Teilnehmern nicht jedes Mal ein Vergleich von Quell- und Zieladresse erfolgen muss bzw. dass jedes Mal eine fest vorgegebene Kommunikationsverbindung mit dem Codenamen fest projektiert sein muss.

Die Aufgabe wird gelöst durch ein Verfahren zur funktional sicheren Verbindungsidentifizierung bei einem Datenaustausch zwischen zwei Kommunikationsteilnehmern in einem Kommunikationssystem, wobei ein erster Kommunikationsteilnehmer als ein Daten-Anbieter mit einer ersten Adresskennung und ein zweiter Kommunikationsteilnehmer als Daten-Anfrager mit einer zweiten Adresskennung arbeitet, der zweite Kommunikationsteilnehmer sendet bei einer Anfrage von sicherheitsgerichteten Daten des ersten Kommunikationsteilnehmers in einem Anfrage-Telegramm eine Reihenfolge-Nummer der Datenanforderung und seine zweite Adresskennung zum ersten Kommunikationsteilnehmer und der erste Kommunikationsteilnehmer antwortet darauf mit einem Antwort-Telegramm, welches die sicherheitsgerichteten Daten, die erste Adresskennung, die Reihenfolge-Nummer und die zweite Adresskennung umfasst, dabei wird nach Erhalt des Antwort-Telegramms im zweiten Kommunikationsteilnehmer geprüft, ob dieses Telegramm die zweite Adresskennung des anfragenden zweiten Kommunikationsteilnehmers enthält, ob dieses Telegramm die Reihenfolgenummer des Anfrage-Telegramms des zweiten Kommunikationsteilnehmers enthält und ob dieses Telegramm die erste Adresskennung des angefragten ersten Kommunikationsteilnehmers umfasst, für den Fall, dass alle Prüfschritte positiv sind, werden die sicherheitsgerichteten Daten akzeptiert und ansonsten verworfen.

Mit Vorteil ist nun ein Verfahren zur Verfügung gestellt worden, bei welchem es möglich ist, eine funktional sichere Verbindungsidentifizierung zu realisieren, bei welchem es nicht mehr notwendig ist, dass ein Überwachungsmechanismus auf Seiten des Datenanbieters hinsichtlich der Kommunikationsbeziehung durchgeführt werden muss. Mit diesem Verfahren zur funktional sicheren Verbindungsidentifizierung erhält man eine "Beziehungs-flexible funktional sichere Kommunikation mit einer einseitigen Prüfung". Trotz der Vereinfachung werden nun alle sicherheitsrelevanten Anforderungen wie Aktualität, d.h. Timeliness, Authentizität und Integrität erfüllt. Ein Überwachungsmechanismus seitens des Datenanbieters ist nicht mehr notwendig. Auch braucht keine Zeitinformation mehr im Telegramm des Datenanbieters hinterlegt werden, sondern es wird in dem Datenanforderer eine Datenanforderung mit den folgenden zwei Dateninformationen an den Datenbieter gesendet a) die ID/Adresse des Datenanforderers, also die erste Adresskennung und b) eine Reihenfolge-Nummer des Datenanforderers. Der Datenanbieter kopiert die beiden Dateninformationen aus dem Telegramm der Datenanforderung in ein Telegramm des Datenanbieters und fügt diesen beiden Dateninformationen folgende Daten hinzu: Die c) aktuellen Prozessdaten, d) die ID-Adresse/des Datenanbieters, also die erste Adresskennung, wodurch man eine beziehungs-flexible funktional sichere Kommunikation mit einseitiger Prüfung erhält. Im Daten-Anfrager werden dann die Daten a) bis d) geprüft.

Um das Verfahren weiter zu verbessern, wird im ersten Kommunikationsteilnehmer zusätzlich eine Prüfsumme über die sicherheitsgerichteten Daten, die erste Adresskennung, die Reihenfolge-Nummer und die zweite Adresskennung gebildet und im Antwort-Telegramm mit verschickt, dabei wird nach Erhalt des Antwort-Telegramms im zweiten Kommunikationsteilnehmer geprüft, ob die über die Daten a) bis d) gebildete Prüfsumme korrekt ist.

Das Verfahren wird weiterhin dadurch verbessert, dass im zweiten Kommunikationsteilnehmer bei einer Anfrage der sicherheitsgerichteten Daten ein Zeitzähler für eine Überwachungszeit gestartet wird und dem Anfrage-Telegramm zugeordnet wird, und in dem zweiten Kommunikationsteilnehmer zusätzlich geprüft wird, ob innerhalb der Überwachungszeiten nach Absenden des Anfrage-Telegramms das zugehörige Antwort-Telegramm angekommen ist, ansonsten werden für die angefragten sicherheitsgerichteten Daten Ersatzwerte bereitgestellt.

Demnach überwacht der zweite Kommunikationspartner die Zeit zwischen einer Anforderung und dem Empfang des zu einer Reihenfolge-Nummer zugehörigen Antwort-Telegramms mit der Zeit eines Watchdogs-Timers und wird bei Ablauf der Watchdog-Zeit vor dem Empfang des erwarteten Antwort-Telegramms eine sicherheitsgerichtete Reaktion einleiten, beispielsweise Ersatzwerte bereitstellen.

Die Übertragungssicherheit kann weiterhin verbessert werden, wenn bei den angefragten sicherheitsgerichteten Daten Datenstrukturen verwendet werden, dabei wird dann in dem ersten Kommunikationsteilnehmer zusätzlich eine Checksumme über die Datenstruktur gebildet und im Antworttelegramm mit verschickt.

Dabei wird vorteilhafter Weise zur Absicherung der Datenstruktur im ersten Kommunikationsteilnehmer den in der Datenstruktur enthaltenen Datentypen ein datenspezifischer Repräsentant zugeordnet und anschließend werden über die Repräsentanten die Checksumme gebildet, und dann wird die Datenstruktur mit der über die Repräsentanten gebildete Checksumme übertragen, wobei im zweiten Kommunikationsteilnehmer zu den in der empfangenen Datenstruktur enthaltenen Datentypen erneut der datentypspezifische Repräsentant zugeordnet wird, und erneut über die Repräsentanten die Checksumme gebildet wird, die übertragene und die erneut berechnete Checksumme wird auf der Seite des zweiten Kommunikationsteilnehmers geprüft und bei einer Abweichung wird eine Datenverfälschung innerhalb der Datenstruktur erkannt.

Hinsichtlich einer Vielfach-Kommunikation, bei dem es beispielsweise einen Daten-Anbieter und viele Daten-Anfrager gibt, wird das Verfahren dahingehend verbessert, dass bei einem Datenaustausch zwischen mehreren Kommunikationsteilnehmern in einem Kommunikationssystem zumindest der erste Kommunikationsteilnehmer als ein Daten-Anbieter arbeitet und eine Mehrzahl anderer Kommunikationsteilnehmer als Daten-Anfrager arbeiten, wobei im ersten Kommunikationsteilnehmer ermittelt wird, wie viele Daten-Anfrager in einem bestimmten Zeitraum Daten anfragen und diese ermittelte Anzahl wird einem weiteren Daten-Anfrager sodann mitgeteilt, welcher daraufhin entscheiden kann, ob er seine Anfrage zurückstellt. Mit dieser optionalen Ergänzung kann ein F-Daten-Anbieter ermitteln, wie viele F-Daten-Anfrager in einem aktuellen Zeitraum F-Daten anfordern und wenn nur eine begrenzte Anzahl von F-Daten-Anfrager innerhalb einer kurzen Zeit bedienbar sind, kann der F-Daten-Anbieter mitteilen, wie viele Daten-Anfrager sich angemeldet haben. Hiermit kann ein "neuer" F-Daten-Anfrager erkennen, ob er seine F-Datenanfrage zurückstellen soll oder sofort stellen kann. Des Weiteren können die einzelnen Daten-Anfrager die Zahl der angemeldeten Datenverbraucher nutzen um in einem Prozess z.B. eine Fahrgeschwindigkeit zu reduzieren und damit eine größere Reaktionszeit zuzulassen.

Vorteilhafter Weise wird das Verfahren für eine fehlersichere Controller zu Controller-Kommunikation, bei welcher Datenstrukturen nach dem OPC-UA Standard aufgebaut sind, verwendet.

Die Zeichnung zeigt ein Ausführungsbeispiel der Erfindung, dabei zeigt die
- FIG 1: ein Prinzipbild eines Kommunikationssystems mit einer funktional sicheren Kommunikation,
- FIG 2: der zeitliche Ablauf von Anfrage-Telegrammen eines zweiten Kommunikationspartners an einen ersten Kommunikationspartner,
- FIG 3: ein Zustandsgraf für einen Programmablauf im ersten Kommunikationspartner,
- FIG 4: ein Zustandsgraf für einen Programmablauf in dem zweiten Kommunikationspartner und
- FIG 5: ein Beispiel für eine Telegrammstruktur eines Anfrage-Telegramms und eines Antwort-Telegramms.

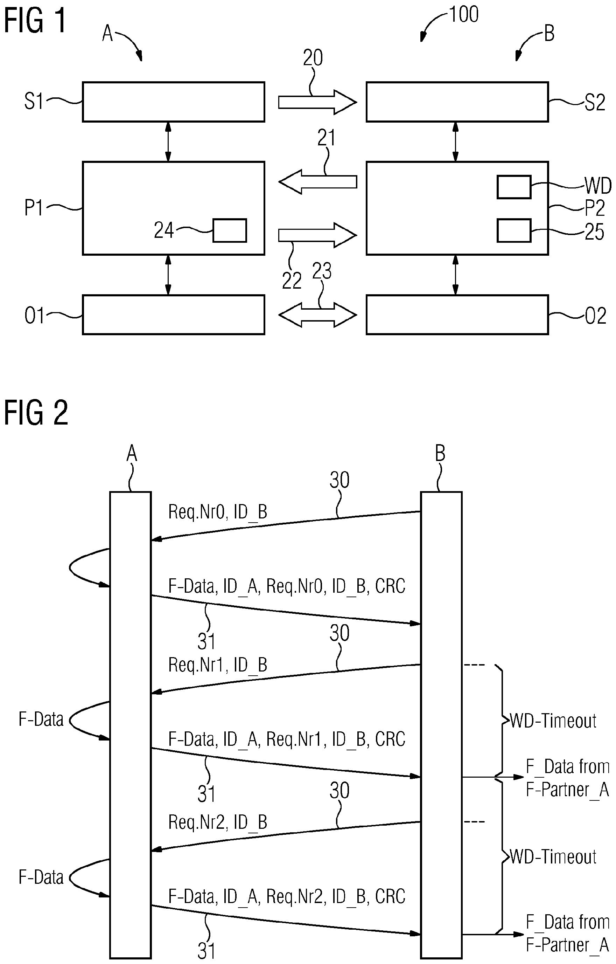

Gemäß der FIG 1 ist ein Kommunikationssystem 100 zur funktional sicheren Kommunikation zwischen einem ersten Kommunikationsteilnehmer A und einem zweiten Kommunikationsteilnehmer B dargestellt. Der erste Kommunikationsteilnehmer A umfasst eine erste Sicherheitsapplikation S1, ein erstes Sicherheitsmittel P1 und eine erste OPC-UA-Dienste-Vorrichtung O1. Die erste Sicherheitsapplikation S1 kann beispielsweise eine Not-Halt-Vorrichtung oder eine Steuerung für eine Schleusentür sein.

Das erste Sicherheitsmittel P1 ist ein Programm, welches nach den Vorgaben eines Sicherheits-Standards, beispielsweise PROFIsafe, nun dahingehend erweitert wurde, dass es ein "Safety Over OPC UA" realisiert. Es wird hier nun das bisher bekannte PROFIsafe Verfahren um eine Sicherheit für OPC UA Daten im PROFIsafe-Umfeld erweitert.

Die erste OPC-UA-Dienste-Vorrichtung O1 kann beispielsweise als ein OPC-UA-Server oder als ein OPC-UA-Kommunikations-Stack ausgestaltet sein.

Der zweite Kommunikationsteilnehmer B weist im Wesentlichen einen analogen Aufbau auf. Eine OPC-UA-Kommunikation 23 wird nunmehr zwischen der ersten OPC-UA-Dienste-Vorrichtung O1 und einer zweiten OPC-UA-Dienste-Vorrichtung O2 realisiert. Die zweite OPC-UA-Dienste-Vorrichtung O2 steht nun wiederum mit einem zweiten Sicherheitsmittel P2, in welchem die Norm realisiert ist, in Verbindung. Aufgesetzt auf das zweite Sicherheitsmittel P2 ist eine zweite Sicherheitsapplikation S2.

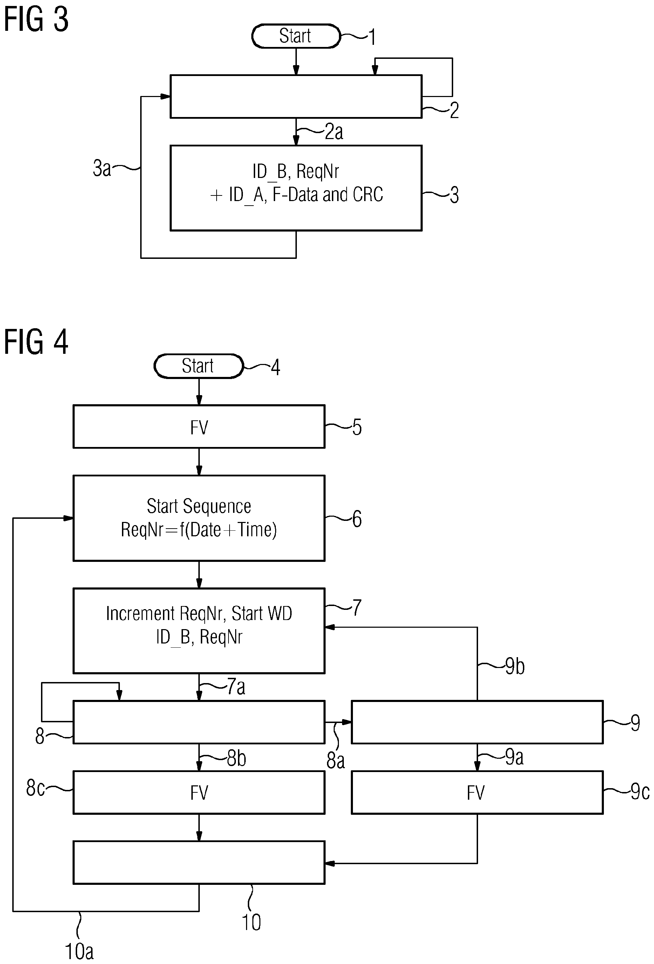

Der erste Kommunikationsteilnehmer A arbeitet als ein Daten-Anbieter und kann damit Daten in einer Datenversorgungsrichtung 20 dem zweiten Kommunikationsteilnehmer B anbieten. Demnach arbeitet der zweite Kommunikationsteilnehmer B als Daten-Anfrager. Der zweite Kommunikationsteilnehmer B wird bei einer Anfrage 21 von sicherheitsgerichteten Daten F-Data des ersten Kommunikationsteilnehmers A in einem Anfrage-Telegramm 30 (siehe FIG 4) eine Reihenfolge-Nummer Req.Nrᵢ der Datenanforderung und eine zweite Adresskennung ID_B zum ersten Kommunikationsteilnehmer A senden. Der erste Kommunikationsteilnehmer A antwortet daraufhin mit einem Antwort-Telegramm 31 (siehe FIG 4), welches die sicherheitsgerichteten Daten F-Data, die erste Adresskennung ID_A, die Reihenfolge-Nummer Req.Nrᵢ und die zweite Adresskennung ID_B umfasst.

Nach Erhalt des Antwort-Telegramms 31 im zweiten Kommunikationsteilnehmer B wird geprüft, ob dieses Telegramm die zweite Adresskennung ID_B des anfragenden zweiten Kommunikationsteilnehmers B enthält, und ob dieses Telegramm die Reihenfolge-Nummer Req.Nrᵢ des Anfrage-Telegramms 30 des zweiten Kommunikationsteilnehmers B enthält und ob dieses Telegramm die erste Adresskennung ID_A des angefragten ersten Kommunikationsteilnehmers A umfasst, für den Fall, dass alle Prüfschritte positiv sind, werden die sicherheitsgerichteten Daten F-Data akzeptiert und ansonsten verworfen. Diese Prüfschritte sind als Software in dem zweiten Sicherheitsmittel P2 realisiert.

Weiterhin ist im zweiten Sicherheitsmittel P2 realisiert, dass bei einer Anfrage der sicherheitsgerichteten Daten F-Data ein Zeitzähler WD für eine Überwachungszeit gestartet wird und dem Anfrage-Telegramm 30 zugeordnet wird, und in dem zweiten Kommunikationsteilnehmer B zusätzlich geprüft wird, ob innerhalb der Überwachungszeit nach Absenden des Anfrage-Telegramms 30 das zugehörige Antwort-Telegramm 31 angekommen ist, ansonsten werden für die angefragten sicherheitsgerichteten Daten F-Data Ersatzwerte FV bereitgestellt.

In dem ersten Sicherheitsmittel P1 ist ein Mittel 24 zum Ermitteln der Anzahl von Datenanfragen implementiert. Bei einem Datenaustausch zwischen mehreren Kommunikationsteilnehmern in einem Kommunikationssystem 100, wobei zumindest der erste Kommunikationsteilnehmer als ein Daten-Anbieter arbeitet und eine Mehrzahl anderer Kommunikationsteilnehmer B als Daten-Anfrager arbeiten, wird vorteilhafter Weise im ersten Kommunikationsteilnehmer A über das Mittel 24 zum Ermitteln der Anzahl von Datenanfragen ermittelt, wie viele Daten-Anfrager in einem bestimmten Zeitpunkt Daten anfragen und diese ermittelte Anzahl wird einen weiteren Daten-Anfrager sodann mitgeteilt, welcher daraufhin entscheiden kann, ob er seine Anfrage zurückstellt. Dazu weist das zweite Sicherheitsmittel P2 ein Zurückstellmittel 25 auf.

Mit der FIG 2 ist eine 1:1 unidirektionale Kommunikation zwischen dem ersten Kommunikationsteilnehmer A und dem zweiten Kommunikationsteilnehmer B dargestellt. Für eine sichere Verbindungsidentifizierung, welche eine beziehungs-flexible Safety Communication mit einer einseitigen Prüfung realisiert, wird gemäß dem Verfahren von den zweiten Kommunikationsteilnehmer B ein Anfrage-Telegramm 30 mit einer Reihenfolge-Nummer Req.Nr₀ und seiner eigenen zweiten Adresskennung ID_B gesendet. Als Antwort erhält der zweite Kommunikationsteilnehmer B vom ersten Kommunikationsteilnehmer A ein Antwort-Telegramm 31 mit den angefragten sicherheitsgerichteten Daten F-Data, der ersten Adresskennung ID_A des ersten Kommunikationsteilnehmers A und der zweiten Adresskennung ID_B des zweiten Kommunikationsteilnehmers B und einer zusätzlichen Prüfsumme CRC.

In diesem Verfahren ergeben sich als Vorteil für den Daten-Anbieter, also dem ersten Kommunikationsteilnehmer A, dass dieser einfacher ausgestaltet werden kann, dieser muss den Daten-Verbraucher, also den zweiten Kommunikationsteilnehmer B nicht mehr kennen.

Die Anfragen von Telegrammen, also das Aussenden der Anfrage-Telegramme 30 erfolgt zyklisch. Der Datenverbraucher, also der zweite Kommunikationsteilnehmer B ist nun verantwortlich für die Sequenz, die Authentizität, die Timelines, die Verbindungs-ID und die fortlaufende Reihenfolge-Nummer oder auch Request-Number genannt.

Die sicherheitsrelevanten Daten sind normalerweise Zustandsinformationen wie auch in den genannten Beispielen zu erkennen ist: Zustand "Not-Halt gedrückt ja/nein" oder "Brücke offen ja/nein".

Die maximale funktional sichere Reaktionszeit (in der IEC 61784-3 die SFRT) muss in den betroffenen Anwendungen eingehalten werden, deshalb muss der Datenanforderer möglichst kurz nach Erhalt des Antworttelegramms eine erneute Datenanfrage senden um immer den aktuellen Zustand der Informationen zu bekommen. Dies wird zyklisch so lange wiederholt, solange diese Sicherheitsfunktion benötigt wird (z.B. solange sich das Schiff in dem Beispiel vor oder unter der Brücke befindet) .

FIG 3 zeigt eine Zustandsmaschine für einen zu implementierenden Programmablauf im ersten Sicherheitsmittel P1. Wesentlich ist hier, dass der erste Kommunikationsteilnehmer A nur auf einen Request bzw. auf ein Anfrage-Telegramm 30 reagieren muss.

Ausgehend von einem Start 1 des Daten-Anbieters gelangt man in einen Zustand "Warten auf Anfrage" 2, welcher zyklisch überprüft wird. Hat der Daten-Anbieter eine Anfrage 2a erhalten, so stellt er ein Antwort-Telegramm 31 "Zusammenstellen und Sende Antwort-Telegramm" 3. Das Zusammenstellen passiert auf folgende Weise, nehme die zweite Adresskennung ID_B und die Reihenfolge-Nummer Req.Nrᵢ des anfragenden Kommunikationsteilnehmer, also in diesem Fall, des zweiten Kommunikationsteilnehmers B und füge die eigene erste Adresskennung ID_A, die sicherheitsgerichteten Daten F-Data und eine Checksumme CRC hinzu. Nach erfolgreichem Zusammenstellen des Antwort-Telegramms 31 kann der Zustand "Sende Antwort-Telegramm" 3 über "Antwort-Telegramm gesendet" 3a verlassen werden und der Zustandsgraf befindet sich wieder im Zustand "Warten auf Anfrage" 2.

Gemäß FIG 4 ist der Zustandsgraf für eine Implementierung im zweiten Kommunikationsteilnehmer B bzw. im zweiten Sicherheitsmittel P2 dargestellt.

Ausgehend von einem Start 4 des Daten-Anfragers gelangt man in eine Anweisung "nutze/setze Ersatzwerte FV" 5. Der Zustand 6 "Starte Sequenz (erzeuge Reihenfolge-Nummer)" erzeugt eine Reihenfolge-Nummer Req.Nrᵢ als Funktion des Datums und der Zeit. Danach wird übergegangen in einen "Sende Anfrage/Starte Zeitzähler-Zustand" 7. Demnach wird von hier aus das Anfrage-Telegramm 30 gesendet, gleichzeitig wird die Reihenfolge-Nummer Req.Nrᵢ inkrementiert und ein Zeitzähler WD gestartet. Zustand 7 wird über Anfrage gesendet 7a verlassen und man gelangt in einen Zustand "Warten auf Antwort" 8. Solange der Zeitzähler WD also der Watchdog nun abläuft, kann hier fehlerfrei auf ein Antwort-Telegramm 31 gewartet werden.

Ist innerhalb der Zeitspanne des Zeitzählers WD das Antwort-Telegramm 31 eingegangen; gelangt man über "Empfangen" 8a in einen Prüfzustand 9. Hier werden die Prüfschritte ausgeführt. Es wird geprüft: 1. Ob innerhalb der Überwachungszeit nach Absenden der Datenanforderung überhaupt ein Datentelegramm eingegangen ist und 2. Ob das Telegramm die Adresskennung des Daten-Anfragers enthält, ob dieses Telegramm die Reihenfolge-Nummer der letzten Datenanfrage enthält, 4. Ob dieses Telegramm die Adresskennung des angefragten Daten-Anbieters enthält, 5. Ob die Signatur der Daten korrekt ist und wenn alle Prüfschritte 1 bis 5 positiv sind, werden die Daten akzeptiert und eine Meldung generiert "Messwerte o.k." 9b somit werden die Prozesswerte, also die sicherheitsgerichteten Daten F-Data verwendet.

Sollte die Prüfung fehlgeschlagen sein, so wird über "Fehler erkannt/Daten verwerfen" 9a die Aktion Daten verwerfen eingeleitet und es werden über "Nutze/Setze-Ersatzwerte" 8c die Ersatzwerte FV aktiviert. Über einen Fehlerzustand 10 können nun weitere Diagnosemeldungen 10a generiert werden.

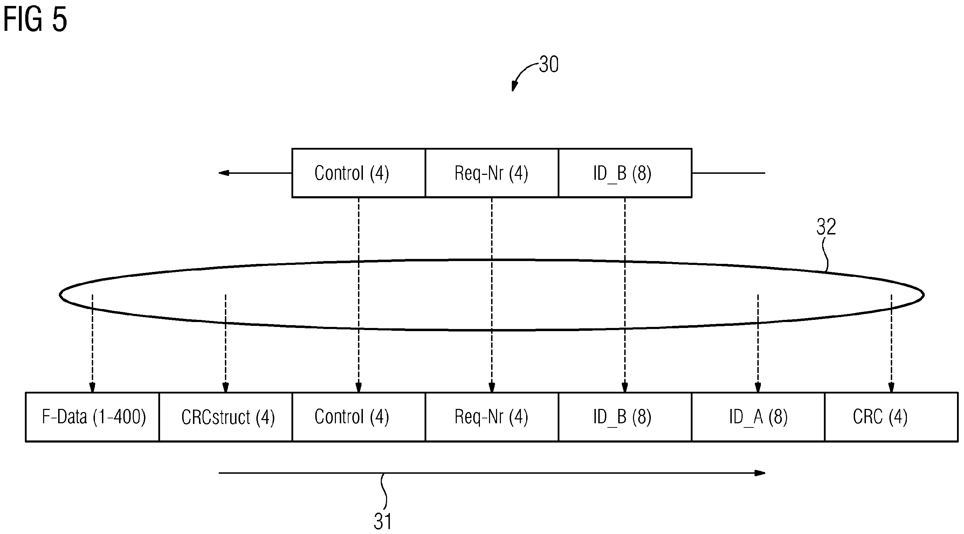

FIG 5 zeigt ein Beispiel für eine Telegramm-Struktur sowohl für das Anfrage-Telegramm 30 als auch für das Antwort-Telegramm 31. Ist das Anfrage-Telegramm 30 beim Daten-Anbieter eingetroffen, so führt der Daten-Anbieter Aktionen 32 aus.

Das bedeutet, das Anfrage-Telegramm 30 wird ergänzt um die erste Adress-Kennung ID_A um eine Prüfsumme CRC, um eine weitere Checksumme CRC_{struct}, welche insbesondere für das Erkennen von Vertauschungen in Datenstrukturen genutzt wird, und es werden die bereits im Anfrage-Telegramm 30 gesendete Reihenfolge-Nummer Req.Nrᵢ und die zweite Adresskennung ID_B kopiert.

In Klammern sind jeweils die Anzahl der zur Verfügung stehenden Bytes angegeben. FIG 5 zeigt ebenfalls noch eine mögliche Erweiterung des Telegrammes in Form einer Steuerinformation Control, welche ebenfalls im Anfrage-Telegramm 30 enthalten ist. Damit sendet der Daten-Anfrager an den Daten-Anbieter zusätzlich eine Steuerinformation Control, die in der Antwort des Daten-Anbieters mit zurückgesendet wird und anhand derer der Daten-Anfrager prüft, ob die richtige Steuerinformation Control ausgeführt wurde. Beispielsweise könnte der Daten-Anfrager die Steuerinformation Control in der Datenanforderung mit schicken, welche den Daten-Anbieter in seiner Antwort beeinflusst, z.B. könnte die Steuerinformation Control lauten "gib mir Datum-Nummer X" worauf der Daten-Anbieter in seiner Antwort "Datum-Nummer X" zusätzlich zur Steuerinformation Control bereitstellen muss.

Applikationsbeispiele für die Beziehungs-Flexible Safety Kommunikation mit einseitiger Prüfung wären beispielsweise folgende:
Not-Halt bei modularen Maschinen
Für Not-Halt-Taster gilt in der Sicherheitstechnik die Regel, dass beim Drücken des Not-Halt-Tasters sämtliche Maschinen, die sich im Sichtfeld des Betätigers befinden, anhalten müssen. Dies bedeutet, dass diejenige Maschine, an der der Not-Halt-Taster angeschlossen ist, die Information "Not-Halt-Taster wurde gedrückt/noch nicht gedrückt" an alle übrigen Maschinen, die im Sichtfeld eines potentiellen Betätigers liegen, weitergeben muss. Um potentiell gefährliche Verwechslungen zu vermeiden, muss jede Not-Halt-Nachricht dem Versender eindeutig zugeordnet werden können. Umgekehrt ist es hier nicht nötig, dass der Sender prüfen kann, ob eine Nachricht beim korrekten Empfänger angekommen ist, da die sichere Reaktion sowieso nur im Empfänger erfolgen kann.

Nach dem Stand der Technik würde an jeden Not-Halt-Taster und jeden Empfänger von Not-Halt-Signalen ein Authenticity-Code vergeben. Die Empfänger kennen jeweils die Codes ihres Senders, und umgekehrt kennen die Sender den Code ihres Empfängers. Das Hinzufügen einer neuen Maschine, d.h. eines neuen Empfängers, macht daher die Anpassung aller Sender erforderlich.

Durch die nunmehr vorliegende Beziehungsflexible Kommunikation ist eine Anpassung der Sender nicht erforderlich. Lediglich dem neu hinzugefügten Empfänger muss mitgeteilt werden, welche Not-Halt-Signale er regelmäßig erhalten muss, und wie die dazugehörigen Sender-IDs lauten.

### Durchfahrt von Schiffen durch bewegliche Brücken

In diesem Szenario fragt ein (Binnen-)Schiff bei einer beweglichen Brücke an, ob die Durchfahrt möglich ist. Die Brücke fungiert als Datenanbieter, das Schiff als Datenverbraucher. Sicherheitsrelevant ist hier, dass das Schiff prüfen kann, ob es mit der richtigen Brücke kommuniziert, und nicht z.B. mit der hinter ihm liegenden Brücke. Allen Brücken wird eine Sender-ID zugeordnet, die alle Schiffe kennen müssen. Umgekehrt ist es für den sicheren Betrieb jedoch nicht unbedingt erforderlich, dass die Brücken die Schiffe identifizieren können. Durch die Beziehungsflexible Kommunikation können daher neue Schiffe in Betrieb genommen werden, ohne die Brücken umzuparametrieren.

Nach dem Stand der Technik müssten auch die Schiffe mit Codes versehen werden, die den Brücken bekannt sind. Die Inbetriebnahme eines neuen Schiffes macht dann die Anpassung aller Brücken erforderlich.

## Patentansprüche

1. Verfahren zur funktional sicheren Verbindungsidentifizierung bei einem Datenaustausch zwischen zwei Kommunikationsteilnehmern A,B, in einem Kommunikationssystem (10), wobei ein erster Kommunikationsteilnehmer ,A, als ein Daten-Anbieter mit einer ersten Adresskennung ,ID_A, und ein zweiter Kommunikationsteilnehmer ,B, als Daten-Anfrager mit einer zweiten Adresskennung ,ID_B, arbeitet, **dadurch gekennzeichnet, dass** der zweite Kommunikationsteilnehmer ,B, bei einer Anfrage (21) von sicherheitsgerichteten Daten ,F-Data, des ersten Kommunikationsteilnehmers ,A, in einem Anfrage-Telegramm (30) eine Reihenfolge-Nummer , Req Nr, der Datenanforderung und seine zweite Adresskennung ,ID_B, zum ersten Kommunikationsteilnehmer ,A, sendet und der erste Kommunikationsteilnehmer ,A, darauf mit einem Antwort-Telegramm (31) antwortet, welches
- die sicherheitsgerichteten Daten ,F-Data ,
- die erste Adresskennung,ID_A,
- die Reihenfolge-Nummer, Req Nr, und
- die zweite Adresskennung, ID_B, umfasst, dabei wird nach Erhalt des Antwort-Telegramms (31) im zweiten Kommunikationsteilnehmer ,B, geprüft, ob dieses Telegramm die zweite Adresskennung ,ID_B, des anfragenden zweiten Kommunikationsteilnehmers ,B, enthält, ob dieses Telegramm die Reihenfolge-Nummer ,Req Nr, des Anfrage-Telegramms (30) des zweiten Kommunikationsteilnehmers ,B, enthält und ob dieses Telegramm die erste Adresskennung ,ID_A, des angefragten ersten Kommunikationsteilnehmers ,A, umfasst, für den Fall, dass alle Prüfschritte positiv sind, werden die sicherheitsgerichteten Daten ,F-Data, akzeptiert und ansonsten verworfen.

2. Verfahren nach Anspruch 1, wobei im ersten Kommunikationsteilnehmer ,A, zusätzlich eine Prüfsumme ,CRC, über
- die sicherheitsgerichteten Daten ,F-Data ,
- die erste Adresskennung ,ID_A ,
- die Reihenfolge-Nummer ,Req Nr, und
- die zweite Adresskennung ,ID_B, gebildet wird und im Antwort-Telegramm (31) mit verschickt, dabei wird nach Erhalt des Antwort-Telegramms (31) im zweiten Kommunikationsteilnehmer ,B, geprüft, ob die über die Daten gebildete Prüfsumme ,CRC, korrekt ist.

3. Verfahren nach Anspruch 1 oder 2, wobei im zweiten Kommunikationsteilnehmer ,B, bei einer Anfrage der sicherheitsgerichteten Daten ,F-Data, ein Zeitzähler ,WD, für eine Überwachungszeit gestartet wird und dem Anfrage-Telegramm (30) zugeordnet wird, und im zweiten Kommunikationsteilnehmer ,B, zusätzlich geprüft wird, ob innerhalb der Überwachungszeit nach Absenden des Anfrage-Telegramms (30) das zugehörige Antwort-Telegramm (31) angekommen ist, ansonsten werden für die angefragten sicherheitsgerichteten Daten ,F-Data, Ersatzwerte ,FV, bereitgestellt.

4. Verfahren nach einem der Ansprüche 1 bis 3, wobei für den Fall, dass die angefragten sicherheitsgerichteten Daten ,F-Data, als eine Datenstruktur aufgebaut sind, im ersten Kommunikationsteilnehmer ,A, zusätzlich eine Checksumme ,CRCstruct, über die Datenstruktur gebildet wird und im Antwort-Telegramm (31) mit verschickt wird.

5. Verfahren nach Anspruch 4, wobei zur Absicherung der Datenstruktur im ersten Kommunikationsteilnehmer ,A, den in der Datenstruktur enthaltenen Datentypen ein datentypspezifischer Repräsentant zugeordnet wird, und anschließend über die Repräsentanten die Checksumme ,CRCstruct, gebildet wird, und dann die Datenstruktur mit der über die Repräsentanten gebildete Checksumme ,CRCstruct, übertragen wird, wobei im zweiten Kommunikationsteilnehmer ,B, zu den in der empfangenen Datenstruktur enthaltenen Datentypen erneut der datentypspezifische Repräsentant zugeordnet wird, und erneut über die Repräsentanten die Checksumme ,CRCstruct, gebildet wird, die übertragene und die erneut berechnete Checksumme wird auf der Seite des zweiten Kommunikationsteilnehmers ,B, geprüft und bei einer Abweichung wird eine Datenverfälschung innerhalb der Datenstruktur erkannt.

6. Verfahren nach einem der Ansprüche 1 bis 5, wobei bei einen Datenaustausch zwischen mehreren Kommunikationsteilnehmern in einem Kommunikationssystem (100) zumindest der erste Kommunikationsteilnehmer ,A, als ein Daten-Anbieter arbeitet und eine Mehrzahl anderer Kommunikationsteilnehmer als Daten-Anfrager arbeiten, wobei im ersten Kommunikationsteilnehmer ,A, ermittelt wird, wieviele Daten-Anfrager in einem bestimmten Zeitraum Daten anfragen und diese ermittelte Anzahl wird einem weiteren Daten-Anfrager sodann mitgeteilt, welcher daraufhin entscheiden kann, ob er seine Anfrage zurückstellt.

7. Verfahren nach einem der Ansprüche 4 oder 5, wobei die Datenstruktur nach dem OPC UA Standard aufgebaut ist.

## Claims

1. Method for functionally safe connection identification when interchanging data between two communication subscribers, A, B, in a communication system (10), wherein a first communication subscriber, A, operates as a data provider with a first address identifier, ID_A, and a second communication subscriber, B, operates as a data requester with a second address identifier, ID_B,
**characterized in that** the second communication subscriber, B, in the case of a request (21) for safety-oriented data, F_Data, from the first communication subscriber, A, transmits a sequence number, Req Nr, of the data request and its second address identifier, ID_B,to the first communication subscriber, A, in a request message (30) and the first communication subscriber, A, then responds with a response message (31) comprising
- the safety-oriented data, F_Data,
- the first address identifier, ID_A,
- the sequence number, Req Nr, and
- the second address identifier, ID_B,
and, after receiving the response message (31), a check is carried out in the second communication subscriber, B, in order to determine whether this message contains the second address identifier, ID_B, of the requesting second communication subscriber, B, whether this message contains the sequence number, Req Nr, of the request message (30) from the second communication subscriber, B, and whether this message comprises the first address identifier, ID_A, of the first communication subscriber, A, to which a request has been sent and, if all checking steps are positive, the safety-oriented data, F_Data, are accepted and are otherwise rejected.

2. Method according to Claim 1, wherein a checksum, CRC, is additionally formed over
- the safety-oriented data, F_Data,
- the first address identifier, ID_A,
- the sequence number, Req Nr, and
- the second address identifier, ID B, in the first communication subscriber, A, and is concomitantly sent in the response message (31), and, after receiving the response message (31), a check is carried out in the second communication subscriber, B, in order to determine whether the checksum, CRC, formed over the data is correct.

3. Method according to Claim 1 or 2, wherein, in the case of a request for the safety-oriented data, F_Data, a time counter, WD, is started for a monitoring time in the second communication subscriber, B, and is assigned to the request message (30), and a check is additionally carried out in the second communication subscriber, B, in order to determine whether the associated response message (31) has arrived within the monitoring time after sending the request message (30) and otherwise replacement values, FV, are provided for the requested safety-oriented data, F_Data.

4. Method according to one of Claims 1 to 3, wherein, if the requested safety-oriented data, F_Data, are constructed as a data structure, a checksum, CRCstruct, is additionally formed over the data structure in the first communication subscriber, A, and is concomitantly sent in the response message (31).

5. Method according to Claim 4, wherein, in order to protect the data structure in the first communication subscriber, A, a data-type-specific representative is assigned to the data types contained in the data structure and the checksum, CRCstruct, is then formed over the representatives and the data structure with the checksum, CRCstruct, formed over the representatives is then transmitted, wherein the data-type-specific representative is again assigned to the data types contained in the received data structure in the second communication subscriber, B, and the checksum, CRCstruct, is again formed over the representatives, the transmitted checksum and the recalculated checksum are checked in the second communication subscriber, B, and data corruption inside the data structure is detected if there is a discrepancy.

6. Method according to one of Claims 1 to 5, wherein, when interchanging data between a plurality of communication subscribers in a communication system (100), at least the first communication subscriber, A, operates as a data provider and a plurality of other communication subscribers operate as data requesters, wherein it is determined in the first communication subscriber, A, how many data requesters request data in a particular period, and this determined number is then communicated to a further data requester which can then decide whether to defer its request.

7. Method according to either of Claims 4 and 5, wherein the data structure is constructed according to the OPC UA standard.

## Revendications

1. Procédé d'identification de connexion sécurisée fonctionnellement dans un échange de données entre deux participants ,A,B, à une communication, dans un système (10) de communication dans lequel un premier participant, ,A, à la communication opère comme offreur de données ayant un premier indicatif ,ID_A, d'adresse et un deuxième participant ,B, à la communication comme demandeur de données ayant un deuxième indicatif ,ID B, d'adresse,
**caractérisé en ce que** le deuxième participant ,B, à la communication envoie, sur une demande (21) de données, F-Data, sécurisées du premier participant ,A, à la communication, dans un télégramme (30) de demande un numéro ,Req Nr, de série de la demande de données et son deuxième indicatif ,ID_B, d'adresse au premier participant ,A, à la communication et le premier participant ,A, à la communication y répond par un télégramme (31) de réponse, qui comprend
- les données, F-Data, sécurisées,
- le premier indicatif, ID_A d'adresse,
- le numéro ,Req Nr, de série et
- le deuxième indicatif ,ID_B, d'adresse,
- il est contrôlé ensuite, après la réception du télégramme (31) de réponse dans le deuxième participant ,B, à la communication, si ce télégramme contient le deuxième indicatif ,ID_B, d'adresse du deuxième participant ,B, à la communication demandeur, si ce télégramme contient le numéro ,Req Nr, de série du télégramme (30) de demande du deuxième participant ,B, à la communication et si ce télégramme comprend le premier indicatif ID_A d'adresse du premier participant ,A, à la communication interrogé, dans le cas où tous les stades de contrôle sont positifs, les données ,F-Data, sécurisées sont acceptées et sinon rejetées.

2. Procédé suivant la revendication 1, dans lequel dans le premier participant ,A, à la communication, on forme en outre, une somme ,CRC, de contrôle sur
- les données ,F-Data, sécurisées,
- le premier indicatif ,ID_A, d'adresse,
- le numéro ,Req Nr, de série et
- le deuxième indicatif, ID_B,d'adresse et on l'envoie avec le télégramme (31) de réponse,
après la réception du télégramme (31) de réponse par le deuxième participant ,B, à la communication, on contrôle si la somme ,CRC, de contrôle formée sur les données est correcte.

3. Procédé suivant la revendication 1 ou 2, dans lequel, dans le deuxième participant ,B, à la communication, on fait débuter, lors d'une demande des données ,F-Data, sécurisée un compteur ,WD, de temps pour un temps de contrôle et on l'affecte au télégramme (30) de demande et, dans le deuxième participant ,B, à la communication, on contrôle, en outre, si, dans le temps de contrôle après l'envoi du télégramme (30) de demande, le télégramme (31) de réponse associé est arrivé, sinon on procure pour les données ,F-Data, sécurisées demandées des valeurs ,FV, de remplacement.

4. Procédé suivant l'une des revendications 1 à 3, dans lequel, dans le cas où les données , F-Data, sécurisées demandées sont constituées sous la forme d'une structure de données, on forme dans le premier participant ,A, à la communication, en outre, une somme ,CRCstruct, de contrôle de la structure de données et on l'envoie avec le télégramme (31) de réponse.

5. Procédé suivant la revendication 4, dans lequel, pour sécuriser la structure de données dans le premier participant ,A, à la communication, on affecte aux types de données contenus dans la structure de données, un représentant spécifique du type de données et ensuite on forme par le représentant la somme ,CRCstruct, de contrôle et on transmet la structure de données avec la somme ,CRCstruct, de contrôle formée par les représentants, dans lequel, dans le deuxième participant ,B, à la communication, on affecte aux types de données contenus dans la structure de données reçue à nouveau les représentants spécifiques du type de données et on forme à nouveau par les représentants la somme ,CRCstruct, de contrôle, on contrôle la somme de contrôle transmise et recalculée du côté du deuxième participant ,B, à la communication et, s'il y a un écart, on détecte une falsification des données au sein de la structure de données.

6. Procédé suivant l'une des revendications 1 à 5, dans lequel, lors d'un échange de données entre plusieurs participants à la communication dans un système (100) de communication, au moins le premier participant ,A, à la communication opère en offreur de données et une pluralité d'autres participants à la communication opèrent en demandeurs de données, dans lequel, dans le premier participant ,A, à la communication, on détermine combien de demandeurs de données font une demande dans un laps de temps déterminé et on fait part de ce nombre déterminé à un autre demandeur de données immédiatement, de sorte que celui-ci peut décider s'il rappelle sa demande.

7. Procédé suivant l'une des revendications 4 ou 5, dans lequel la structure de données est constituée suivant la norme OPC UA.
